# EUROPEAN PATENT APPLICATION

(11) **EP 1 053 815 A2**
(43) Date of publication of application: **22.11.2000**
(21) Application number: 00850079.5
(22) Date of filing: 08.05.2000
(51) Int. Cl.: B23D 61/02, B23D 61/12

(54) **Saw blade with recurring goups of teeth of different height and width for smooth cut**

(30) Priority: 21.05.1999 US 315992
(71) Applicant: Kapman AB, 811 81 Sandviken (SE)
(72) Inventor: Hayden, Robert C., Branford, Connecticut (US)
(74) Representative: Taquist, Lennart

(57) **Abstract**

Sawblade with recurring groups of teeth, where each group comprises an even number of set teeth (14,15), half of them set to the right (15) and half of them set to the left (14), one high straight tooth (17) with chamfered edge (19) and one wide tooth (16) with two approximately parallel edges (12). The high tooth and the wide tooth may be separate teeth, or the same tooth with two carbide tips or the same tooth with one carbide tip both high and wide.

## Description

### Background

The body of a saw blade must be thinner than the kerf produced by the cutting teeth. To achieve this, sawblades have teeth of two general types, set teeth with the same thickness as the body but bent to alternating sides, and teeth which are made wider than the body either by swaging deformation of the body material or by attachment of separate wider cutting tips. Each kind of teeth has its advantages and disadvantages, which determine the choice of saw for a specific task. The choice may sometimes be a difficult compromise. This is especially important for difficult-to-saw metals, when tooth tips of cemented carbide are needed.

For metal saws, set teeth with carbide tips are known from patent US 3,104,562. They are simple to make and need only small carbide pieces, which may be attached by welding at low cost. Since the teeth can bend elastically slightly towards the centerline they are less likely to get stuck if the kerf narrows due to deformation of the workpiece. One disadvantage is that variations in lateral cutting force due to unstable cutting or minor edge wear will produce variations in lateral bending of the teeth and corresponding uneven cut surfaces.

Symmetric teeth with greater width than the sawblade thickness are known from patents US 4,011,783 and 4,784,033. Their advantage is that they produce a kerf of well defined thickness with smooth surfaces. Since the forces are basically symmetric, the cut will be straight. One disadvantage is that the teeth may need grinding to different shapes in order to produce narrow chips that will leave the kerf readily. Another disadvantage is that the lateral forces may become very large if the kerf narrows, causing high friction and risk of damage to the tooth corners. Wide carbide teeth need to be attached by brazing, which is less simple than welding.

The purpose of the present invention is to combine the advantages of set teeth and wide teeth to produce a sawblade which is simpler to make and maintain than those with all wide teeth, and which produces better surfaces and straighter cuts than those with all set teeth.

### Description

A sawblade according to the invention is described with reference to the figures, where figure 1 shows a cross-section of a sawblade with tooth tips of four different shapes, figure 2 shows a side view of a tooth group of a sawblade comprising four different teeth, figure 3 and 4 side views of tooth groups comprising three different teeth. The sawblade may be of any type, circular, straight or preferably a bandsaw loop. The teeth of different shapes occur preferably in recurring groups with determined pitch.

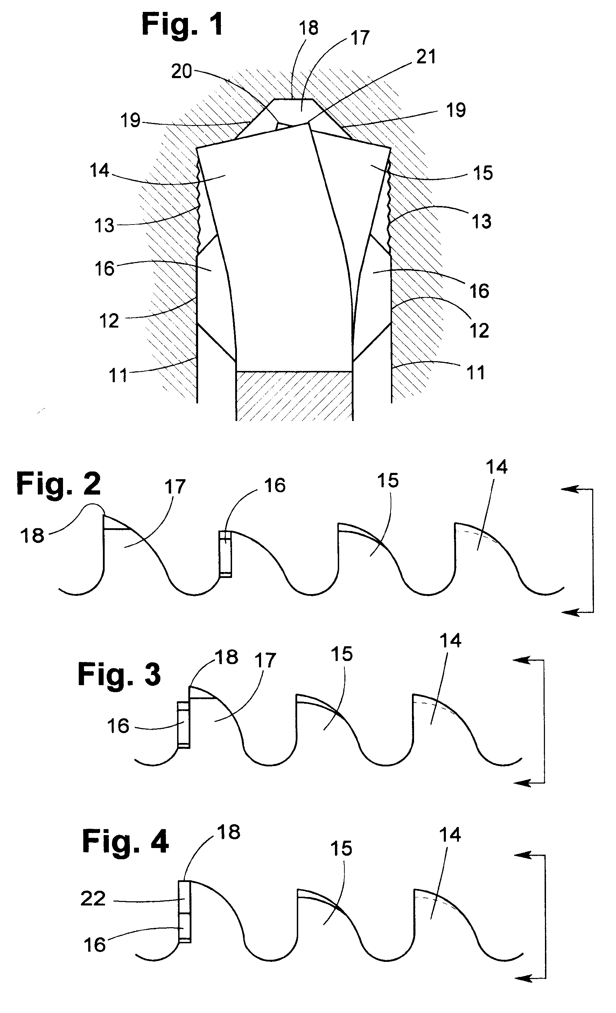

Figure 1 shows a cross-section of a sawblade with four different tooth shapes, sectioned behind a set tooth (14), which is preceded by a tooth (15) set to the other side. The set teeth will cut the side surfaces (13) of the kerf somewhat unevenly due to the small lateral contact surface. To produce smooth surfaces (11) of the kerf, the set teeth are preceded by a wide tooth (16) with straight basically parallel lateral edges (12) serving two purposes, stabilizing the sawblade laterally and smoothing the surfaces (13) cut by set teeth (14,15). The wide tooth (16) has preferably a brazed-on carbide tip, pre-shaped before brazing. Since the forces on the lateral edges are generally lateral and equal, the stresses are generally compressive and internal in the carbide, with insignificant stress in the braze layer. The set teeth are also preceded by a high straight tooth (17) with a short top edge (18) between two chamfer edges (19). The high tooth will do the initial cutting, and because of the symmetrical chamfers (19) there will be no lateral force, but even a stabilizing effect if the blade should stray to the side or vibrate. The chamfers should extend so far that their outer corners are not exposed above the set teeth.

Each recurring group should contain an even number of set teeth, half of them set to the right (14) and half of them set to the left (15). The set teeth are preferably provided with small welded-on carbide tips, ground with sloping cross-edges (16). Since the lateral forces in case of narrowing kerf are carried by the wide teeth (11), the set teeth should be made with sharp outer corners or very small chamfers. The elastic bending inwards of the set teeth also ensures that the corners are not overloaded.

Figure 2 shows a side view of one embodiment where there are two set teeth (14,15) in each recurring group. The tallest tooth is a straight unset tooth (17) which may be provided with a welded-on carbide tip. This purpose of this tooth is to ensure that the set teeth (14,15) cut equally much, by first cutting a deeper groove in the center of the cut. The set teeth then cut independently of each other and wear equally. To achieve this, the straight tooth (17) must be tall enough to shelter the inner corners (20,21) of the set teeth by removing workpiece material before the inner corners might touch it. In its turn, the straight tooth should be protected from lateral forces which might damage its corners, by being provided with chamfers large enough that the lower corners are sheltered by the set teeth. The wide tooth (16) and the straight tooth (17) are separate teeth in figure 2. It would be possible to use four set teeth or more in a similar embodiment.

It is also possible that as shown in figure 3 the carbide piece of the wide tooth (16) is brazed onto a straight tooth with welded-on carbide tip (17), if the brazing temperature does not reduce the weld strength.

Figure 4 shows another form of the invention, where the wide tooth and the tallest tooth are combined by making the wide carbide piece (22) high enough to include the tip (18) of a tall straight tooth. The chamfers can then be made to extend all the way from the tip (18) to the lateral edges (12). The tooth group may comprise other tall straight teeth with smaller welded-on tips, such as described above.

## Claims

1. Sawblade with recurring groups of teeth of different height and width, characterized by each group comprising an even number of set teeth with narrow width, half of them set to the right and half of them set to the left, at least one straight tooth with greater height and an edge with chamfered corners, and one wide tooth with greater width and approximately parallel lateral edges at lower height than the edges of the set teeth.

2. Sawblade according to claim 1, where the wide tooth has a brazed-on carbide tip.

3. Sawblade according to claim 2, where the set teeth have welded-on carbide tips.

4. Sawblade according to claim 1, 2 or 3, where each group of four teeth comprises two set teeth, one straight tooth and one wide tooth.

5. Sawblade according to claim 1, 2 or 3, where each group of three teeth comprises two set teeth and one tooth which is both high with chamfered edge and at lower height wide with approximately parallel edges.

6. Sawblade according to claim 5, where the high tooth has one carbide tip for the high chamfered edge and another carbide tip for the parallel edges.

7. Sawblade according to claim 5, where the high tooth has only one carbide tip with both a chamfered edge and two approximately parallel edges.
